# FASCICULE DE BREVET EUROPEEN

(11) **EP 3 311 559 B1**
(45) Date de publication et mention de la délivrance du brevet: **07.12.2022**
(21) Numéro de dépôt: 16736526.1
(22) Date de dépôt: 16.06.2016
(51) Int. Cl.: H04M 3/42, H04W 76/00, H04W 4/00

(54) **ÉTABLISSEMENT D'UNE COMMUNICATION PAR ALLOCATION À UN TERMINAL APPELANT D'UN IDENTIFIANT D'APPEL INTERMÉDIAIRE DÉDIÉ À LA COMMUNICATION**
EINRICHTUNG EINER KOMMUNIKATION DURCH ZUWEISUNG ZU EINEM ANRUFENDEN ENDGERÄT EINES ZWISCHENANRUFIDENTIFIKATORS FÜR DIE KOMMUNIKATION
ESTABLISHMENT OF A COMMUNICATION BY ALLOCATION TO A CALLING TERMINAL OF AN INTERMEDIATE CALL IDENTIFIER DEDICATED TO THE COMMUNICATION

(30) Priorité: 19.06.2015 FR 1555653
(43) Date de publication de la demande: 25.04.2018
(73) Titulaire: Orange, 92130 Issy-les-Moulineaux (FR)
(72) Inventeur: CASEAU, François, 75015 Paris (FR); LACOQUE, Jean-Claude, 78370 Plaisir (FR)
(86) Numéro de dépôt international: PCT/FR2016/051462
(87) Numéro de publication internationale: WO 2016/203159

(56) Documents cités:
- US-A1- 2002 142 753
- US-A1- 2010 159 924

## Description

### Domaine de l'invention

La présente invention concerne l'établissement d'une communication depuis un premier dispositif de communication à destination d'un deuxième dispositif de communication, les premier et deuxième dispositifs de communication ayant chacun un identifiant d'appel principal. Elle concerne plus particulièrement les services de communication garantissant l'anonymat d'un utilisateur appelant.

### Arrière-plan de l'invention

Les services de communication garantissant l'anonymat d'un utilisateur appelant proposent actuellement d'allouer un identifiant d'appel secondaire au terminal de l'utilisateur appelant disposant déjà d'un identifiant d'appel principal. Par exemple, dans le cas où l'utilisateur appelant dispose d'un terminal ce communication mobile, l'identifiant d'appel principal est un identifiant MSISDN (en anglais « Mobile Station International Subscriber Directory Number ») correspondant de manière unique à la carte SIM (en anglais « Subscriber Identity Module ») qui est fournie par l'opérateur du réseau mobile auprès duquel s'est inscrit l'utilisateur. En règle générale, cet identifiant est le numéro de téléphone du terminal mobile dans ledit réseau mobile. De tes services de garantie de l'anonymat sont par exemple proposés lorsque l'abonné appelant souhaite passer une annonce sur un site Internet dédié à cet effet, tel que par exemple un site de petites annonces, un site de rencontres, un réseau social de type personnel ou professionnel, etc....II est alors proposé à l'utilisateur de bénéficier d'un identifiant d'appel secondaire qui permet à ce dernier d'utiliser cet identifiant d'appel secondaire pour contacter par téléphone toute personne ayant laissé ses coordonnées sur le site Internet dédié, sans avoir à dévoiler à cette personne son identifiant d'appel principal. L'utilisateur appelant est également joignable sur cet identifiant d'appel secondaire.

Un tel service de garantie d'anonymat fonctionne de la façon suivante. L'utilisateur qui souhaite en bénéficier s'inscrit préalablement à la plateforme gérant ce service en fournissant ses coordonnées personnelles, et en particulier son identifiant d'appel principal. Un identifiant d'appel secondaire lui est alors alloué puis est enregistré dans la plateforme en correspondance avec son identifiant principal. L'utilisateur télécharge l'application dédiée à ce service sur son téléphone. Lorsque l'utilisateur souhaite joindre un usager d'un site Internet tel que mentionné plus haut et dont la plateforme de gestion communique avec la plateforme du service de garantie d'anonymat, il envoie à cette dernière, via l'application, un message contenant son identifiant d'appel principal et l'identifiant d'appel principal de l'usager qu'il souhaite appeler. A partir de l'identifiant principal du terminal appelant, la plateforme de service récupère l'identifiant d'appel secondaire du terminal appelant et envoie en retour au terminal appelant un message contenant un identifiant d'appel dédié à la communication à établir, lequel est par exemple un numéro de téléphone spécifique préalablement enregistré dans la plateforme du service de garantie d'anonymat. La réception de ce message par le terminal appelant déclenche alors un appel vocal à destination de l'identifiant d'appel dédié. Cet appel est intercepté par un routeur du réseau de communication qui a une connaissance préalable de l'identifiant d'appel dédié. A cet effet, le routeur récupère auprès de la plateforme du service de garantie d'anonymat l'identifiant secondaire du terminal appelant, puis émet un appel depuis cet identifiant secondaire vers l'identifiant d'appel principal du terminal de l'usager appelé. Enfin, le routeur établit la communication entre le terminal appelant et le terminal appelé.

Bien que le service décrit ci-dessus soit bien adapté pour garantir efficacement l'anonymat de l'utilisateur qui y a souscrit et assurer la continuité de l'appel, il peut s'avérer très coûteux pour l'appelant lorsque par exemple, l'identifiant d'appel dédié à la communication à établir se trouve dans une zone tarifaire différente de celle dans laquelle est situé l'identifiant principal du terminal appelé. Ainsi, par exemple, si l'identifiant principal du terminal appelé est associé à un réseau de communication de type fixe et que l'identifiant d'appel dédié à la communication à établir est associé par la plateforme de service à un réseau de communication de type mobile, l'appel passé depuis cet identifiant vers l'identifiant d'appel principal du terminal appelé s'avère au final très coûteux pour l'utilisateur du terminal appelant. Un tel déséquilibre de charges est donc préjudiciable à l'utilisation de ce type de service de communication garantissant l'anonymat de l'utilisateur appelant.

En outre, un tel service de garantie d'anonymat est limité à un unique contexte d'usage conditionné par la souscription de l'utilisateur à des sites Internet ciblés.

Le document US2002142753 A1 (PECEN MARK et al) concerne une méthode et un appareil, permettant à un équipement mobile d'un utilisateur d'accéder anonymement à un réseau dans des circonstances où l'accès au réseau est prohibé. L'appareil de D1 comprend un générateur d'identité de remplacement, positionné dans l'équipement mobile et générant un IMSI (International Mobile Subscriber Identity) de remplacement en réponse à la prohibition d'un accès réseau. L'IMSI de remplacement est ensuite utilisé pour les échanges de signalisation requérant des informations liées à une carte SIM quand l'accès est prohibé.

### Objet et résumé de l'invention

Un des buts de l'invention est de remédier à des inconvénients de l'état de la technique précité.

A cet effet, un objet de la présente invention concerne un procédé d'établissement d'une communication depuis un premier dispositif de communication à destination d'un deuxième dispositif de communication, les premier et deuxième dispositifs de communication ayant chacun un identifiant d'appel principal, le procédé mettant en œuvre, au niveau d'un dispositif de gestion de communication :
- une réception, en provenance du premier dispositif de communication, d'un message comprenant :
   - des informations d'identification associées au premier dispositif de communication qui ont été préalablement enregistrées dans le dispositif de gestion de communication,
   - l'identifiant d'appel principal du deuxième dispositif de communication,
- un envoi au premier dispositif de communication d'un message contenant un identifiant d'appel dédié à la communication à établir et fonction soit de l'identifiant d'appel principal du deuxième dispositif de communication contenu dans le message reçu, soit d'un service de communication associé à la communication à établir,
- une interception d'un appel du premier dispositif de communication vers l'identifiant d'appel dédié, puis un routage dudit appel vers l'identifiant d'appel principal du deuxième dispositif de communication, en utilisant un identifiant d'appel secondaire du premier dispositif de communication, ledit identifiant secondaire ayant été préalablement associé en correspondance avec les informations d'identification associées au premier dispositif de communication,
   - - un établissement de la communication entre le premier et le deuxième dispositif de communication.

Compte tenu du fait que, selon une première alternative de l'invention, l'identifiant d'appel dédié à la communication à établir est déterminé en fonction de l'identifiant d'appel principal du deuxième dispositif de communication, il est ainsi assuré que la zone tarifaire dans laquelle est situé l'identifiant d'appel dédié à la communication à établir est la même que celle dans laquelle est situé l'identifiant d'appel principal du deuxième dispositif de communication, c'est-à-dire le dispositif de communication destinataire de l'appel. Par conséquent, cette première alternative de l'invention permet avantageusement de garantir l'anonymat de l'utilisateur appelant tout en assurant l'équilibre de terminaison d'appel et en évitant de perturber la chaîne des coûts d'appel pour l'utilisateur appelant.

Par ailleurs, compte tenu du fait que, selon une deuxième alternative de l'invention, l'identifiant d'appel dédié à la communication à établir est déterminé en fonction d'un service de communication associé à la communication à établir, l'établissement de la communication sous couvert d'anonymat peut être élargi à d'autres contextes de communication que celui d'un appel vers un usager d'un site Internet. Un tel service de communication est par exemple un service de communication aux entreprises, dans lequel un salarié souhaite établir une communication de type professionnelle à partir de son dispositif de communication personnel.

Un tel procédé d'établissement de communication est adapté à des communications aussi bien vocales que textuelles. Ce procédé est par ailleurs particulièrement bien adapté pour des communications vocales où l'utilisateur, à l'origine de la communication, doit être mis en relation directe et en temps réel avec l'appelé.

Selon un mode de réalisation particulier, lorsque la détermination d'un identifiant d'appel dédié à la communication à établir est fonction de l'identifiant d'appel principal du deuxième dispositif de communication, il est procédé à une identification du type de réseau auquel le deuxième dispositif de communication est connecté, l'identifiant d'appel dédié étant sélectionné conformément au type de réseau identifié.

Une telle disposition permet d'affecter, de manière simple, à la même zone tarifaire d'appels, l'identifiant d'appel dédié à la communication à établir et l'identifiant d'appel principal du deuxième dispositif de communication.

Selon un autre mode de réalisation particulier, lorsque la détermination d'un identifiant d'appel dédié à la communication à établir est fonction de l'identifiant d'appel principal du deuxième dispositif de communication, l'identifiant d'appel dédié est égal à l'identifiant d'appel principal du deuxième dispositif de communication.

Une telle disposition permet au procédé d'établissement d'une communication d'être mis en œuvre même dans le cas où l'utilisateur appelant établit une communication à partir du premier dispositif de communication à destination d'un identifiant d'appel spécial, tel que par exemple un numéro d'urgence. Dans ce cas particulier, la garantie de l'anonymat n'est pas autorisée et l'appel est routé directement vers le numéro d'urgence en utilisant l'identifiant principal du premier dispositif de communication appartenant à l'utilisateur appelant.

Selon encore un mode de réalisation particulier, lorsque la détermination d'un identifiant d'appel dédié à la communication à établir est fonction d'un service de communication associé à la communication à établir, l'identifiant d'appel dédié est sélectionné en tant qu'identifiant d'appel gratuit.

Une telle disposition permet à l'utilisateur appelant de passer des appels gratuits depuis le premier dispositif de communication, à condition qu'il ait été inscrit à un service de communication associé à la communication à établir, ledit service de communication ayant été enregistré au préalable dans le dispositif de gestion de communication. Une telle disposition est particulièrement adaptée à un service de communication aux entreprises, dans lequel le salarié est susceptible de passer des appels professionnels en mobilité, depuis son téléphone personnel.

L'invention concerne également un dispositif de communication appelant, disposant d'un identifiant d'appel principal, le dispositif de communication appelant comprenant un circuit de traitement agencé pour, préalablement à l'établissement d'une communication avec un dispositif de communication à appeler disposant d'un identifiant d'appel principal:
- un envoi, à destination d'un dispositif de gestion de communication, d'un message de requête d'initialisation de ladite communication, ledit message comprenant :
   - des informations d'identification associées au dispositif de communication appelant qui ont été préalablement enregistrées dans le dispositif de gestion de communication,
   - l'identifiant d'appel principal (IAP2) du dispositif de communication à appeler,
- une réception, en provenance du dispositif de gestion de communication, d'un identifiant d'appel dédié à la communication à établir et fonction soit de l'identifiant d'appel principal du dispositif de communication à appeler, soit d'un service de communication associé à la communication à établir,
- un déclenchement d'un appel vers l'identifiant d'appel dédié en utilisant ledit identifiant d'appel principal dudit dispositif de communication appelant, pour établir ladite communication avec ledit second dispositif.

L'invention concerne également un dispositif de gestion de communication pour l'établissement d'une communication depuis un premier dispositif de communication à destination d'un deuxième dispositif de communication, les premier et deuxième dispositifs de communication ayant chacun un identifiant d'appel principal, ledit dispositif de gestion de communication comprenant un circuit de traitement qui est agencé pour
- une réception, en provenance du premier dispositif de communication, d'un message comprenant :
   - des informations d'identification associées au premier dispositif de communication qui ont été préalablement enregistrées dans la plateforme de gestion de communication,
   - l'identifiant d'appel principal du deuxième dispositif de communication,
- un envoi au premier dispositif de communication d'un message contenant d'un identifiant d'appel dédié à la communication à établir et fonction soit de l'identifiant d'appel principal du deuxième dispositif de communication contenu dans le message reçu, soit d'un service de communication associé à la communication à établir,
- une interception d'un appel du premier dispositif de communication vers l'identifiant d'appel dédié, puis un routage dudit appel vers l'identifiant d'appel principal du deuxième dispositif de communication, en utilisant un identifiant d'appel secondaire du premier dispositif de communication, ledit identifiant secondaire ayant été préalablement associé en correspondance avec les informations d'identification associées au premier dispositif de communication,
- un établissement de la communication entre le premier et le deuxième dispositif de communication.

L'invention concerne encore un programme d'ordinateur pour mettre en œuvre des instructions de code de programme pour l'exécution des étapes du procédé d'établissement d'une communication selon l'invention, lorsque ledit programme est exécuté sur un dispositif de gestion de communication.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en œuvre du procédé d'établissement de communication selon l'invention, tel que décrit ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé d'établissement de communication précité.

### Brève description des dessins

D'autres caractéristiques et avantages apparaîtront à la lecture d'un mode de réalisation préféré décrit en référence aux figures dans lesquelles:
- la figure 1 est une vue schématique et générale d'un système d'établissement d'une communication selon l'invention,
- la figure 2 présente la structure simplifiée d'un mode de réalisation d'un dispositif de gestion de communication appartenant au système de la figure 1,
- la figure 3 présente la structure simplifiée d'un mode de réalisation d'un dispositif de communication initiateur d'une communication dans le système de la figure 1,
- la figure 4 représente les principales étapes d'un procédé d'établissement d'une communication dans le système de la figure 1,
- les figures 5A à 5C représentent des détails de mise en œuvre du procédé illustré sur la figure 4.

### Description détaillée d'un mode de réalisation

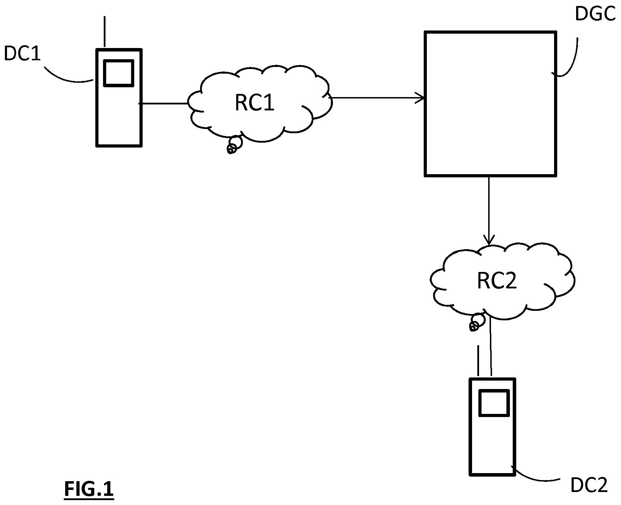

La figure 1 montre schématiquement le système dans lequel est mis en œuvre le procédé d'établissement d'une communication selon un mode de réalisation préféré. Dans un souci de clarté de la figure 1, certains éléments bien connus de ce système ne sont pas représentés. De tels éléments sont par exemple des serveurs, des nœuds, des stations de base, des passerelles ou encore d'autres entités du réseau de télécommunications utilisé dans ce système.

Le système comprend un premier dispositif de communication DC1 apte à établir une communication à destination d'un deuxième dispositif de communication DC2.

Dans l'exemple représenté, le dispositif de communication DC1 est un téléphone mobile comprenant une carte SIM dotée d'un identifiant d'abonné unique appelé IMSI (abréviation anglaise de « International Mobile Subscriber Identity »). De façon connue en soi, cet identifiant est utilisé pour identifier le dispositif de communication DC1 dans son réseau de communication de rattachement RC1, c'est-à-dire le réseau auprès duquel l'utilisateur UT1 du dispositif de communication DC1 s'est abonné. Dans l'exemple représenté, le réseau RC1 est de type mobile tel qu'un réseau GSM (abréviation anglaise de « Global System for Mobile communications ») ou UMTS (abréviation anglaise de « Universal Mobile Télécommunications System »). L'identifiant IMSI est associé à un identifiant d'appel principal MSISDN, noté IAP1, qui est le numéro de téléphone permettant de joindre le dispositif de communication DC1.

Cet exemple n'est bien sûr pas limitatif. Ainsi, selon un autre exemple, le dispositif de communication DC1 est par exemple un téléphone fixe rattaché à un autocommutateur téléphonique privé PABX (de l'anglais « Private Automatic Branch eXchange »).

En fonction du type du réseau de communication RC1, l'identifiant d'appel principal IAP1 du dispositif de communication DC1 pourrait être différent d'un numéro de téléphone. Par exemple, il pourrait consister en des métadonnées associées à l'utilisateur UT1 du dispositif de communication DC1, tel qu'en particulier une image ou des informations sur l'utilisateur, telles que son nom et son adresse.

Le deuxième dispositif de communication DC2 est apte à recevoir la communication initiée par le dispositif de communication DC1. De la même façon que le dispositif de communication DC1, le dispositif de communication DC2 est également doté d'un identifiant d'appel principal IAP2. Dans l'exemple représenté, le dispositif de communication DC2 est un téléphone mobile rattaché à un réseau de communication RC2 de type mobile. Toutefois, le dispositif de communication DC2 peut être également un téléphone fixe rattaché à un réseau de télécommunications commuté ou bien encore un serveur de communication, tel que par exemple un serveur de réception d'appels d'urgence.

Selon un autre exemple non représenté, les réseaux de communication RC1 et RC2 peuvent former un réseau de communication unique d'un même opérateur de télécommunications.

En outre, dans la présente description, on entend par « communication » un appel vocal classique ou n'importe quelle autre session de communication de type données et/ou audio et/ou vidéo initiée par le dispositif de communication DC1 à destination du dispositif de communication DC2.

Le système représenté sur la figure 1 comprend en outre un dispositif de gestion de communication DGC. Un tel dispositif est une plateforme installée dans le réseau qui est destinée à :
- traiter toute communication initiée par le dispositif de communication DC1 à partir de son identifiant d'appel principal IAP1,
- et inversement traiter toute communication initiée par le dispositif de communication DC2 à partir de son identifiant d'appel principal IAP2, à destination de l'identifiant principal IAP1 du dispositif de communication DC1.

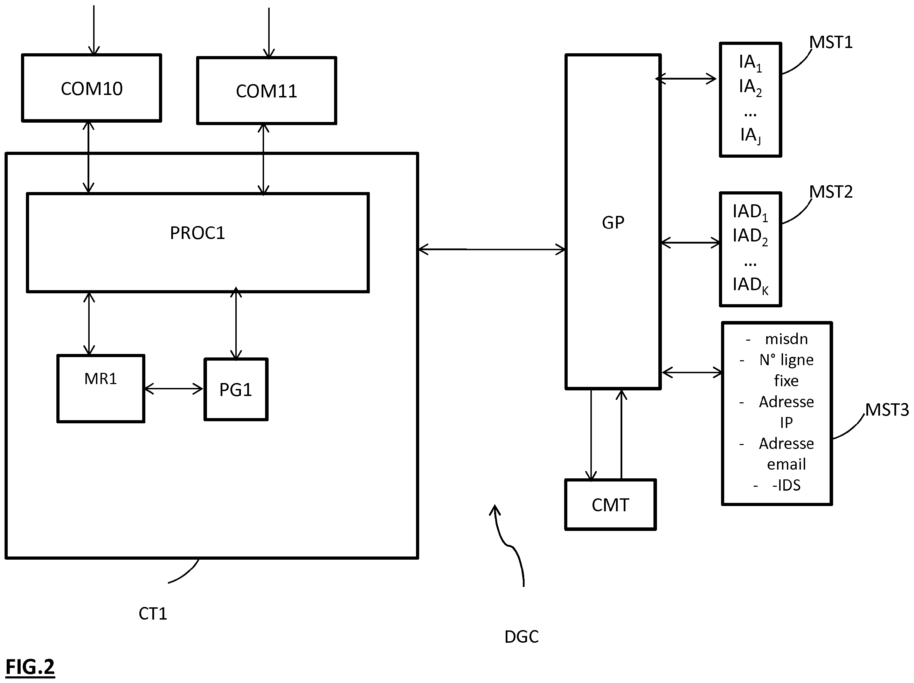

En relation avec la figure 2, on considère maintenant la structure simplifiée de la plateforme de gestion de communication DGC selon un exemple de réalisation de l'invention. Une telle plateforme est adaptée pour mettre en œuvre le procédé d'établissement d'une communication selon l'invention qui va être décrit ci-dessous.

Par exemple, la plateforme DGC de gestion de communication comprend des ressources physiques et/ou logicielles, en particulier un circuit de traitement CT1 pour mettre en œuvre le procédé d'établissement de communication selon l'invention, le circuit de traitement CT1 contenant un processeur PROC1 piloté par un programme d'ordinateur PG1.

A l'initialisation, les instructions de code du programme d'ordinateur PG1 sont par exemple chargées dans une mémoire RAM, notée MR1, avant d'être exécutées par le circuit de traitement CT1.

La plateforme DGC de gestion de communication comprend principalement :
- une interface de communication COM10 qui est adaptée pour échanger des messages avec le dispositif de communication DC1 de la figure 1, via le réseau RC1 ou bien un autre réseau non représenté sur la figure 1, lesdits messages étant conformes par exemple au protocole http (abréviation anglaise de « HyperText Transfer Protocol »),
- une interface de communication COM11 apte à communiquer avec les dispositifs de communication DC1 et DC2 et qui, selon le type de communication à établir, peut-être une interface de communication apte à émettre ou recevoir des appels vocaux ou bien une interface de communication apte à émettre ou recevoir des messages textuels de type SMS (de l'anglais « Short Message Service ») ou bien encore une interface de communication apte à émettre ou recevoir des messages multimédia de type MMS (de l'anglais « Multimedia Messaging Service ») ,
- un gestionnaire de profils GP apte à gérer le profil de l'utilisateur UT1 du dispositif de communication DC1,
- un premier module de stockage MST1, par exemple une base de données, relié au gestionnaire de profils GP et contenant une pluralité d'identifiants d'appel secondaires IA₁, IA₂,...,IAₘ,..., IA_{J} où J est un entier supérieur ou égal à 1 et 1≤m≤J,
- un deuxième module de stockage MST2, par exemple une base de données, relié au gestionnaire de profils GP et contenant une pluralité d'identifiants d'appel IAD₁, IAD₂,..., IADₙ,..., IAD_{K} dédiés à la communication à établir, où K est un entier supérieur ou égal à 1 et 1≤n≤K,
- un troisième module de stockage MST3, par exemple une base de données, relié au gestionnaire de profils GP et contenant des informations d'identification associées au dispositif de communication DC1, ces informations ayant été, lors d'un échange préalable établi entre l'utilisateur UT1 du dispositif de communication DC1 et la plateforme DGC, communiquées à cette dernière, puis enregistrées dans le troisième module de stockage MST3 en association avec un des identifiants d'appel secondaires stockés dans le premier module de stockage MST1, par exemple l'identifiant d'appel secondaire IAₘ.

De telles informations d'identification sont par exemple l'identifiant msisdn du dispositif de communication DC1, le numéro de ligne fixe de l'utilisateur UT1 du dispositif de communication DC1, l'adresse IP ou bien l'adresse email permanente de l'utilisateur UT1.

Les interfaces de communication COM10, COM11, ainsi que le gestionnaire de profils GP, sont pilotés par le processeur PROC1 du circuit de traitement CT1.

Selon un mode de réalisation, les identifiants d'appel secondaires IA₁, IA₂,..., IAₘ,..., IA_{J} précités font partie d'un pool attribué par l'administrateur de la plateforme DGC à un fournisseur de service partenaire auprès duquel s'est préalablement inscrit l'utilisateur UT1 du dispositif de communication DC1. Autrement dit, ce pool d'identifiants d'appels secondaires est réservé au service auquel a souscrit l'utilisateur UT1. Si l'utilisateur UT1 souscrit à un autre service partenaire de la plateforme de gestion de communication DGC, un pool différent d'identifiants d'appels secondaires sera réservé pour cet autre service.

Un identifiant d'appel secondaire sélectionné dans le pool d'identifiants d'appel secondaires IA₁, IA₂,..., IAₘ,..., IA_{J}, par exemple l'identifiant IAₘ, est associé aux informations d'identification relatives au dispositif de communication DC1, qui sont stockées dans le module de stockage MST3. Dans l'exemple représenté, l'identifiant d'appel secondaire sélectionné IAₘ est un numéro de téléphone. Toutefois, en variante et selon le contexte de la communication à établir, l'identifiant d'appel secondaire peut être un alias, un pseudo ou une identité réseau de type msisdn, adresse IP, adresse email, adresse E.164, adresse SIP. En outre, cet identifiant d'appel secondaire peut être enregistré en association avec un identifiant IDS du service auprès duquel l'utilisateur UT1 du premier dispositif de communication DC1 a souscrit. A cet effet, cet identifiant secondaire a une durée de validité qui correspond par exemple à la durée de souscription à ce service ou bien à une durée prédéterminée, fixée au préalable par l'administrateur de la plateforme de gestion de communication DGC.

Selon un mode de réalisation, comme cela sera décrit plus en détail dans la suite de la description, les identifiants d'appel IAD₁, IAD₂,..., IADₙ,..., IAD_{K} dédiés à la communication à établir sont de différents types. Un de ces identifiants peut être un numéro de téléphone associé à un réseau de communication de type fixe et comprenant à cet effet un préfixe particulier PF1. Un autre de ces identifiants peut être un numéro de téléphone associé à un réseau de communication de type mobile et comprenant à cet effet un préfixe particulier PF2. Encore un autre de ces identifiants peut être un numéro de téléphone à tarif spécial et comprenant à cet effet un préfixe particulier PF3. Encore un autre de ces identifiants peut être un numéro d'appel d'urgence (pompiers, police, etc...).

Le gestionnaire de profil GP est connecté à un centre de commutation CMT qui est apte à traiter le trajet de la communication établie depuis le dispositif de communication DC1 jusqu'au dispositif de communication DC2 tels que représentés sur la figure 1.

Le centre de commutation CMT est bien connu en soi. Dans l'exemple représenté, il correspond par exemple à un centre de commutation mobile "MSC" (Mobile Switching Centre) d'un réseau de télécommunications mobile. Selon un autre mode de réalisation dans lequel le dispositif de communication DC1 serait de type fixe, le centre de commutation CMT pourrait être un commutateur local d'un réseau de télécommunications fixe. On notera que dans le réseau de télécommunications fixe, le commutateur local traite les appels locaux entre des abonnés d'un même commutateur ainsi que le départ et l'arrivée du trafic avec les autres commutateurs.

Le centre de commutation CMT est caractérisé par deux fonctions principales.

La première fonction principale est une fonction de contrôle d'appel qui correspond à la fonction centrale d'un commutateur téléphonique. Une telle fonction met en œuvre différentes opérations telles que le décodage d'informations d'adresse et le routage d'appels téléphoniques depuis un premier dispositif de communication appelant vers un deuxième dispositif de communication appelé. Une telle fonction est associée à certaines fonctionnalités d'appel telles que:
- une mise en attente de l'appel,
- un transfert d'appel sur une messagerie vocale lorsque le dispositif de communication appelé n'est pas décroché,
- une sonnerie particulière indiquant à l'appelant que son correspondant est déjà en ligne ou non joignable.

Cette première fonction traite par ailleurs le niveau de signalisation établi au cours de la communication entre les deux dispositifs de communication, c'est-à-dire le niveau correspondant à la signalisation des messages échangés via les différentes entités du réseau de communication.

La deuxième fonction principale est une fonction « Média » pour traiter toute la partie Média de la communication entre les deux dispositifs de communication. Une telle fonction correspond au niveau « Média » de traitement des données textuelles et/ou audio et/ou des images/vidéos échangées entre les deux dispositifs de communication lors de la communication.

Il convient de noter que même si dans le mode de réalisation représenté sur la figure 2, le gestionnaire de profils GP et le centre de commutation CMT sont hébergés ensemble sur la plateforme de gestion de communication DGC, cet exemple n'est en rien limitatif.

En effet, dans une variante de réalisation, la plateforme de gestion de communication DGC pourrait contenir uniquement le gestionnaire de profils GP, le centre de commutation CMT étant hébergé à un autre endroit dans le réseau mais toujours connecté fonctionnellement au gestionnaire de profils GP.

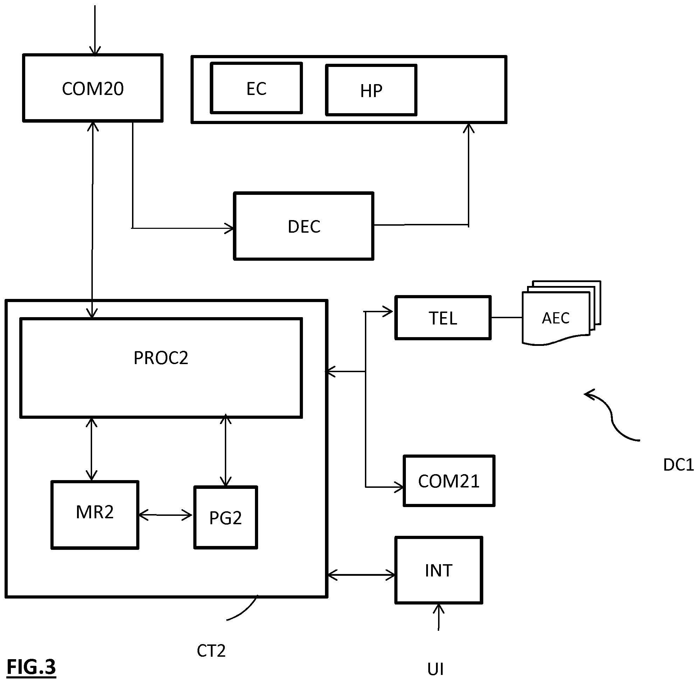

En relation avec la figure 3, on considère maintenant la structure simplifiée du dispositif de communication DC1 selon un exemple de réalisation de l'invention.

Par exemple, le dispositif de communication DC1, ici un téléphone mobile, comprend des ressources physiques et/ou logicielles, en particulier un circuit de traitement CT2 pour mettre en œuvre les échanges avec la plateforme de gestion de communication DGC des figures 1 et 2 préalablement à la communication à établir, puis une fois ladite communication établie.

Le circuit de traitement CT2 contient un processeur PROC2 piloté par un programme d'ordinateur PG2.

A l'initialisation, les instructions de code du programme d'ordinateur PG2 sont par exemple chargées dans une mémoire RAM, notée MR2, avant d'être exécutées par le circuit de traitement CT2.

Le dispositif de communication DC1 comprend principalement :
- une interface de communication COM20 qui est adaptée pour échanger des messages avec le gestionnaire de profils GP de la plateforme de gestion de communication DGC des figures 1 et 2, via le réseau de communication RC1 ou un autre réseau de communication de données non représenté, lesdits messages étant conformes par exemple au protocole http (abréviation anglaise de « HyperText Transfer Protocol »),
- une interface de communication COM21 apte à établir/recevoir un appel via le réseau de communication et qui, selon le type de communication à établir, peut-être une interface de communication apte à émettre ou recevoir des appels vocaux ou bien une interface de communication apte à émettre ou recevoir des messages textuels de type SMS ou bien encore une interface de communication apte à émettre ou recevoir des messages multimédia de type MMS.

Le dispositif de communication DC1 comprend également :
- un module INT de traitement des interactions utilisateurs UI,
- un écran de visualisation EC,
- un haut-parleur HP,
- une interface DEC de décodage audio/vidéo des contenus de type texte, audio, vidéo ou audiovisuel, ladite interface étant adaptée pour transmettre les signaux décodés à l'écran EC ou dans le haut-parleur HP,
- un module TEL de téléchargement de contenus de type texte et/ou audio et/ou audiovisuel ou encore d'applications.

Plus particulièrement, l'interface de communication COM20 est apte, préalablement à l'établissement de la communication avec le deuxième dispositif de communication DC2, à envoyer, à destination de la plateforme de gestion de communication DGC, un message qui comprend :
- les informations d'identification associées au dispositif de communication DC1 et qui ont été préalablement enregistrées, comme expliqué plus haut, dans le module de stockage MST3 de la plateforme de gestion de communication DGC,
- l'identifiant d'appel principal IAP2 du dispositif de communication DC2 à appeler.

En outre, l'interface de communication COM20 est apte à recevoir, en provenance de la plateforme DGC de gestion de communication, via l'interface de communication COM10 de cette dernière, un des identifiants d'appel IAD₁, IAD₂,..., IADₙ,..., IAD_{K} dédiés à la communication à établir qui ont été stockés préalablement dans le module de stockage MST2. La sélection de tel ou tel identifiant d'appel dédié à la communication sera décrit de façon plus détaillée dans la suite de la description.

Le module TEL de téléchargement du dispositif de communication DC1 est en outre apte à télécharger, depuis la plateforme DGC de gestion de communication, une application AEC dédiée à l'établissement d'une communication conformément à la présente invention. Ladite application a notamment pour fonction de déclencher un appel, via le réseau de communication RC1, vers l'identifiant d'appel dédié à la communication à établir, tel que sélectionné par la plateforme DGC de gestion de communication.

Les interfaces de communication COM20, COM21, le module de téléchargement TEL, ainsi que le module INT de traitement des interactions utilisateurs, sont pilotés par le processeur PROC2 du circuit de traitement CT2.

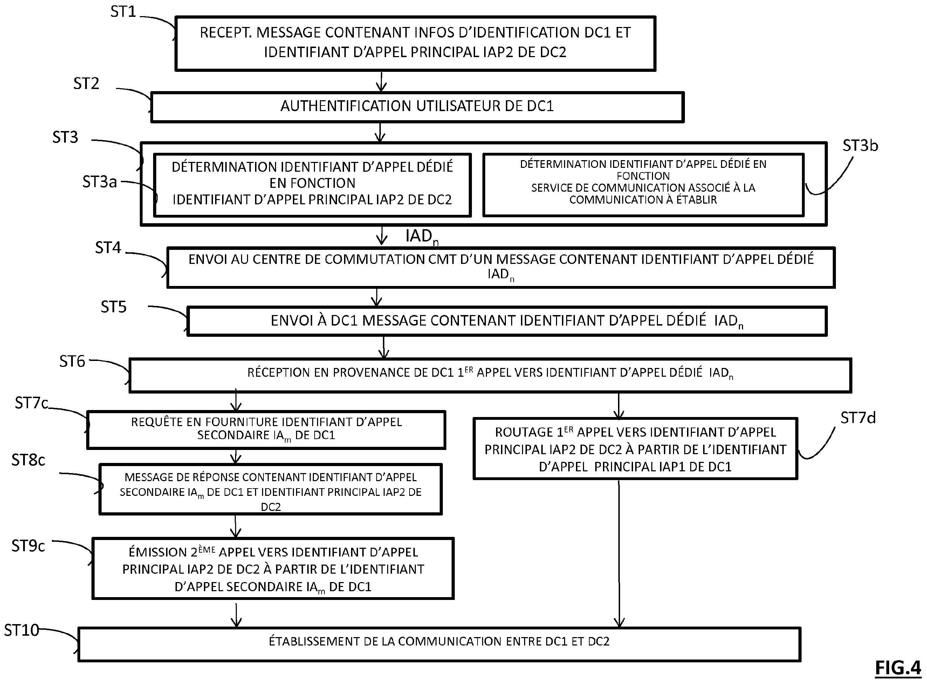

En référence à la figure 4, on décrit maintenant le déroulement d'un procédé d'établissement d'une communication selon l'invention, tel que mis en œuvre dans la plateforme de gestion de communication DGC.

Préalablement au déroulement de ce procédé, il est considéré que :
- l'application AEC d'établissement d'une communication vers un identifiant d'appel dédié a été préalablement téléchargée par le module de téléchargement TEL du dispositif de communication DC1,
- l'utilisateur UT1 du dispositif de communication DC1 a communiqué à la plateforme DGC de gestion de communication les informations d'identification associées à son dispositif de communication DC1,
- la plateforme DGC a communiqué en retour au dispositif de communication DC1 un identifiant d'appel secondaire choisi dans le pool d'identifiants d'appels secondaires IA₁, IA₂,...,IAₘ,..., IA_{J} disponibles au moment de la requête de l'utilisateur UT1. L'identifiant d'appel secondaire sélectionné est par exemple l'identifiant IAₘ.

De façon générale, le procédé d'établissement d'une communication selon l'invention est mis en œuvre dans le cas où l'utilisateur UT1 du dispositif de communication DC1 souhaite initier une communication à partir de ce dernier à destination du dispositif de communication DC2 de la figure 1.

A cet effet, au cours d'une étape ST1 représentée sur la figure 4, le gestionnaire de profils GP de la plateforme de gestion de communication DGC reçoit en provenance du dispositif de communication DC1, via l'interface de communication COM10 de cette dernière, un message, par exemple selon le protocole http, qui contient :
- les informations d'identification relatives au dispositif de communication DC1,
- l'identifiant d'appel principal IAP2 du dispositif de communication DC2.

Au cours d'une étape ST2, la plateforme DGC vérifie que l'utilisateur UT1 est authentifié en comparant les informations d'identification contenues dans le message reçu avec celles enregistrées dans le module de stockage ST3 de la figure 2.

A titre de variante, une telle étape ST2 peut avoir lieu préalablement à l'étape ST1, le message envoyé par le dispositif de communication DC1 à la plateforme DGC ne contenant par exemple que les informations d'identification associées au dispositif de communication DC1.

Au cours d'une étape ST3, la plateforme DGC détermine, parmi les identifiants d'appel IAD₁, IAD₂,..., IADₙ,..., IAD_{K} dédiés à la communication à établir et stockés dans le module de stockage MST2, l'identifiant d'appel dédié le plus pertinent en relation avec la communication à établir, par exemple l'identifiant d'appel IADₙ.

Selon une première alternative ST3a, une telle détermination est avantageusement fonction de l'identifiant d'appel principal IAP2 du dispositif de communication DC2, tel que contenu dans le message reçu à l'étape ST1.

Selon une deuxième alternative ST3b, une telle détermination est avantageusement fonction d'un service de communication associé à la communication à établir.

Un tel identifiant d'appel dédié est destiné à être utilisé comme identifiant d'appel intermédiaire vers lequel est acheminée la communication initiée par le premier dispositif de communication DC1, avant d'être routée vers l'identifiant principal IAP2 du deuxième dispositif de communication DC2. Un tel identifiant d'appel dédié est connu à la fois de la plateforme DGC et du centre de commutation CMT représenté à la figure 2. Bien que sur la figure 2, le module de stockage MST2 contenant ces identifiants d'appel dédiés soit relié au gestionnaire de profils, les identifiant d'appel dédiés pourraient tout aussi bien être délivrés par le centre de commutation CMT sur requête du gestionnaire de profils GP, à chaque fois que le premier dispositif de communication DC1 souhaite initier une communication.

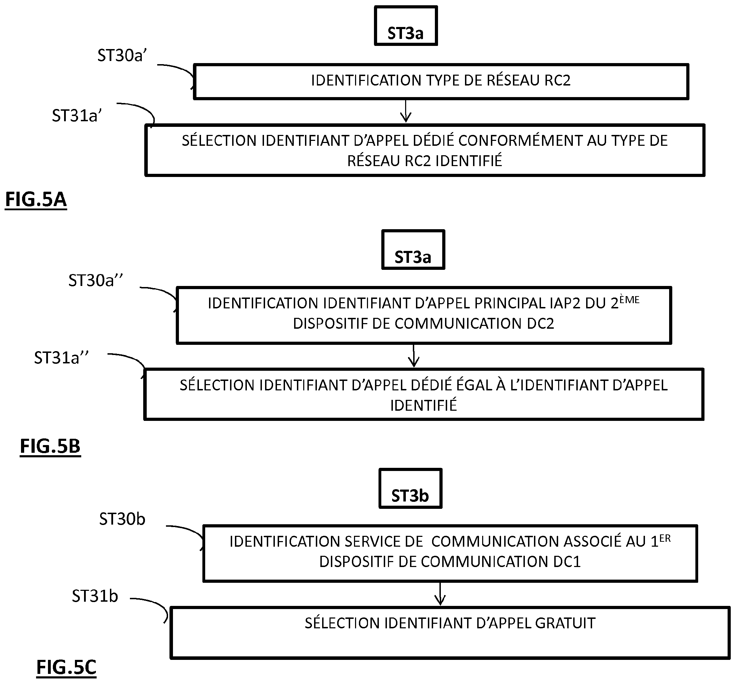

Dans le cas de la première alternative ST3a précitée, selon un premier exemple représenté sur la figure 5A, il est procédé, au cours d'une étape ST30a', à une identification du type du réseau RC2 (figure 1) auquel le deuxième dispositif de communication DC2 est connecté. Au cours d'une étape ST31a', un identifiant d'appel dédié est alors sélectionné dans le module de stockage ST2 conformément au type de réseau identifié. Par exemple, dans le cas où un tel réseau est de type mobile, un identifiant d'appel dédié IADₙ correspondant à un numéro de téléphone mobile est sélectionné dans le module de stockage MST2. Dans le cas où un tel réseau est de type fixe, un identifiant d'appel dédié IADₙ correspondant à un numéro de téléphone fixe est sélectionné dans le module de stockage MST2. Selon une variante de l'étape ST31a', l'identifiant d'appel dédié est sélectionné dans le module de stockage ST2 comme ayant le même préfixe que celui de l'identifiant d'appel principal IAP2 du deuxième dispositif de communication DC2.

Toujours, dans le cas de la première alternative ST3a, selon un deuxième exemple représenté sur la figure 5B, il est procédé, au cours d'une étape ST30a", à une identification de l'identifiant d'appel principal IAP2 du deuxième dispositif de communication DC2. Dans le cas où l'identifiant d'appel principal du deuxième dispositif de communication DC2 est un numéro d'appel d'urgence, au cours d'une étape ST31a", un identifiant d'appel dédié est alors sélectionné dans le module de stockage ST2 en tant que numéro d'appel d'urgence, le même que le numéro d'urgence identifié.

Dans le cas de la deuxième alternative ST3b précitée, selon un exemple représenté sur la figure 5C, il est procédé à une vérification, dans la mémoire de stockage MST3 de la plateforme DGC, qu'un identifiant IDS d'un tel service de communication a bien été enregistré en association avec les informations d'identification associées au premier dispositif de communication DC1. Par exemple, la présence ou l'absence de l'identifiant de service IDS dans le module de stockage MST3 est indiquée par un drapeau mis respectivement à 1 ou 0. Dans le cas de la présence de l'identifiant de service IDS, un identifiant d'appel dédié est alors sélectionné dans le module de stockage MST2 en tant que numéro d'appel gratuit. Selon un exemple de réalisation, un tel service de communication est par exemple un service de communication aux entreprises, dans lequel un salarié souhaite établir une communication de type professionnelle à partir du premier dispositif de communication DC1 qui est ici le téléphone personnel du salarié.

En référence à nouveau à la figure 4, au cours d'une étape ST4, le gestionnaire de profils GP de la figure 2 envoie un message au centre de commutation CMT pour l'informer qu'un identifiant d'appel dédié IADₙ a été sélectionné pour la communication à établir depuis le premier dispositif de communication DC1 vers le second dispositif de communication DC2.

Un tel message comprend l'identifiant d'appel IADₙ dédié à la communication à établir. Ce message pourrait en outre contenir l'identifiant d'appel principal du premier dispositif de communication DC1, dans le cas où plusieurs dispositifs de communication établissent une communication à destination de l'identifiant IADₙ.

Au cours d'une étape ST5, qui peut être mise en œuvre soit avant ou après l'étape ST4, soit simultanément à l'étape ST4, le gestionnaire de profils GP envoie un message au premier dispositif de communication DC1, via l'interface de communication COM10 de la plateforme DGC, par exemple selon le protocole http, ledit message contenant l'identifiant d'appel dédié IADₙ. Dans l'exemple représenté, cet identifiant d'appel dédié est un numéro de téléphone.

Suite à la réception d'un tel message par le premier dispositif de communication DC1, l'application AEC dédiée à l'établissement de la communication, telle qu'installée dans le module de téléchargement TEL du premier dispositif de communication DC1, déclenche l'envoi d'un appel depuis l'interface de communication COM21 de ce dernier, via le réseau de communication RC1, vers l'identifiant d'appel dédié IADₙ, en utilisant son identifiant d'appel principal IAP1.

Au cours d'une étape ST6, cet appel est reçu par le centre de commutation CMT, via l'interface de communication COM11 de la figure 2. Le centre de commutation CMT ayant la connaissance de l'identifiant d'appel dédié IADₙ identifie alors cet appel comme une première branche de la communication à établir entre le premier dispositif de communication DC1 et le deuxième dispositif de communication DC2.

Dans le cas où l'identifiant d'appel dédié IADₙ qui a été sélectionné à la suite de l'étape ST3a ou ST3b est de type fixe, mobile ou gratuit, au cours d'une étape ST7c, le centre de commutation CMT envoie au gestionnaire de profils GP de la figure 2 une requête en fourniture de l'identifiant d'appel secondaire IAₘ, préalablement alloué au premier dispositif de communication DC1 par le gestionnaire de profils GP.

Au cours d'une étape ST8c, en réponse à la requête, le gestionnaire de profils GP envoie au centre de commutation CMT un message contenant l'identifiant d'appel secondaire IAₘ ainsi que l'identifiant d'appel principal IAP2 du deuxième dispositif de communication DC2.

Les échanges entre le centre de commutation CMT et le gestionnaire de profils GP sont par exemple conformes au protocole SIP (de l'anglais « Session Initiation Protocol »).

.A réception de ce message, au cours d'une étape ST9c, le centre de commutation CMT établit un appel à destination de l'identifiant d'appel principal IAP2 du deuxième dispositif de communication DC2 à partir de l'identifiant d'appel secondaire IAₘ du premier dispositif de communication DC1. Le centre de commutation CMT identifie alors cet appel comme une deuxième branche de la communication à établir entre le premier dispositif de communication DC1 et le deuxième dispositif de communication DC2.

Au cours d'une étape ST10, dans le cas où le deuxième dispositif de communication DC2 répond à l'appel, le centre de commutation CMT établit la communication entre le premier dispositif de communication DC1 et le deuxième dispositif de communication DC2. L'utilisateur UT1 du premier dispositif de communication DC1 est ainsi assuré que son identifiant d'appel principal IAP1 ne sera pas divulgué à l'utilisateur du deuxième dispositif de communication DC2. En outre, dans le cas particulier où l'utilisateur est salarié d'une entreprise et que le dispositif de communication DC1 est son téléphone personnel, l'utilisateur est assuré que sa communication à destination du dispositif de communication DC2 ne lui sera pas facturée.

Dans le cas particulier où l'identifiant d'appel dédié IADₙ qui a été sélectionné à la suite de l'étape ST3a est un numéro d'urgence, au cours d'une étape ST7d, le centre de commutation CMT route l'appel émis par le premier dispositif de communication DC1 à destination de l'identifiant d'appel principal IAP2 du deuxième dispositif de communication DC2, à partir de l'identifiant d'appel principal IAP1 du premier dispositif de communication DC1. Le centre de commutation CMT identifie alors cet appel comme une deuxième branche de la communication à établir entre le premier dispositif de communication DC1 et le deuxième dispositif de communication DC2. Dans ce cas particulier, le centre de commutation CMT ne requiert pas l'identifiant d'appel secondaire IAₘ auprès du gestionnaire de profils GP. En outre, le gestionnaire de profils GP n'a pas à fournir au centre de commutation CMT l'identifiant d'appel principal IAP2 du deuxième dispositif de communication puisque cet identifiant est le même que l'identifiant d'appel dédié IADₙ. Grâce à cette disposition, le procédé d'établissement de communication selon l'invention est adaptable aux appels émis vers des numéros d'urgence pour lesquels il est interdit de masquer l'identité principale du dispositif de communication appelant.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention déterminée par les revendications.

## Revendications

1. Procédé d'établissement d'une communication depuis un premier dispositif de communication (DC1) à destination d'un deuxième dispositif de communication (DC2), les premier et deuxième dispositifs de communication ayant chacun un identifiant d'appel principal, le procédé mettant en œuvre, au niveau d'un dispositif de gestion de communication (DGC):
- une réception (ST1), en provenance du premier dispositif de communication, d'un message comprenant :
• des informations d'identification associées au premier dispositif de communication qui ont été préalablement enregistrées dans le dispositif de gestion de communication,
• l'identifiant d'appel principal (IAP2) du deuxième dispositif de communication,
- un envoi (ST5) au premier dispositif de communication d'un message contenant un identifiant d'appel dédié à la communication à établir et fonction soit de l'identifiant d'appel principal du deuxième dispositif de communication contenu dans le message reçu, soit d'un service de communication associé à la communication à établir,
- une interception (ST7c-ST8c) d'un appel du premier dispositif de communication vers l'identifiant d'appel dédié, puis un routage (ST9c) dudit appel vers l'identifiant d'appel principal du deuxième dispositif de communication, en utilisant un identifiant d'appel secondaire du premier dispositif de communication, ledit identifiant secondaire ayant été préalablement associé en correspondance avec les informations d'identification associées au premier dispositif de communication,
- un établissement (ST10) de la communication entre le premier et le deuxième dispositif de communication.

2. Dispositif de gestion de communication (DGC) pour l'établissement d'une communication depuis un premier dispositif de communication (DC1) à destination d'un deuxième dispositif de communication (DC2), les premier et deuxième dispositifs de communication ayant chacun un identifiant d'appel principal, ledit dispositif de gestion de communication comprenant un circuit de traitement (CT1) qui est agencé pour :
- une réception, en provenance du premier dispositif de communication, d'un message comprenant :
• des informations d'identification associées au premier dispositif de communication qui ont été préalablement enregistrées dans la plateforme de gestion de communication,
• l'identifiant d'appel principal du deuxième dispositif de communication,
- un envoi au premier dispositif de communication d'un message contenant d'un identifiant d'appel dédié à la communication à établir et fonction soit de l'identifiant d'appel principal du deuxième dispositif de communication contenu dans le message reçu, soit d'un service de communication associé à la communication à établir,
- une interception d'un appel du premier dispositif de communication vers l'identifiant d'appel dédié, puis un routage dudit appel vers l'identifiant d'appel principal du deuxième dispositif de communication, en utilisant un identifiant d'appel secondaire du premier dispositif de communication, ledit identifiant secondaire ayant été préalablement associé en correspondance avec les informations d'identification associées au premier dispositif de communication,
- un établissement de la communication entre le premier et le deuxième dispositif de communication.

3. Procédé selon la revendication 1 ou dispositif de gestion de communication selon la revendication 2, ladite interception étant mise en œuvre lorsque ledit identifiant d'appel principal (IAP2) du deuxième dispositif de communication est un identifiant d'appel à destination duquel il est autorisé d'utiliser un identifiant d'appelant secondaire.

4. Procédé selon la revendication 1 ou 3, ou dispositif de gestion de communication selon la revendication 2 ou 3, dans lequel lorsque l'identifiant d'appel dédié à la communication à établir est fonction de l'identifiant d'appel principal du deuxième dispositif de communication, l'identifiant d'appel dédié est fonction d'un type de réseau auquel le deuxième dispositif de communication est connecté.

5. Procédé selon la revendication 1 ou 3, ou dispositif de gestion de communication selon la revendication 2 ou 3, dans lequel lorsque l'identifiant d'appel dédié à la communication à établir est fonction de l'identifiant d'appel principal du deuxième dispositif de communication, l'identifiant d'appel dédié est égal à l'identifiant d'appel principal du deuxième dispositif de communication.

6. Procédé selon la revendication 1 ou 3, ou dispositif de gestion de communication selon la revendication 2 ou 3, dans lequel lorsque l'identifiant d'appel dédié à la communication à établir est fonction d'un service de communication associé à la communication à établir, l'identifiant d'appel dédié est sélectionné en tant qu'identifiant d'appel gratuit.

7. Procédé selon l'une des revendications 1 ou 3 à 6, ou dispositif de gestion de communication selon l'une des revendications 2 à 6, dans lequel ledit identifiant d'appel secondaire a une durée de validité.

8. Procédé selon l'une des revendications 1 ou 3 à 7, ou dispositif de gestion de communication selon l'une des revendications 2 à 7, dans lequel ledit identifiant d'appel secondaire fait partie d'une pluralité d'identifiants d'appel secondaires attribués à un fournisseur d'un service dudit premier dispositif de communication DC1.

9. Procédé selon les revendications 7 et 8, ou dispositif de gestion de communication selon les revendications 7 et 8, dans lequel ladite durée de validité dudit identifiant d'appel secondaire est une durée de souscription audit service.

10. Procédé, mis en œuvre par un dispositif de communication appelant (DC1), disposant d'un identifiant d'appel principal (IAP1) ledit procédé de communication comprenant, préalablement à l'établissement d'une communication avec un dispositif de communication à appeler disposant d'un identifiant d'appel principal:
- un envoi, à destination d'un dispositif de gestion de communication (DGC), d'un message de requête d'initialisation de ladite communication, ledit message comprenant :
• des informations d'identification associées au dispositif de communication appelant préalablement enregistrées dans le dispositif de gestion de communication,
• l'identifiant d'appel principal (IAP2) du dispositif de communication à appeler,
- une réception, en provenance du dispositif de gestion de communication, d'un identifiant d'appel dédié à la communication à établir et fonction soit de l'identifiant d'appel principal du dispositif de communication à appeler, soit d'un service de communication associé à la communication à établir,
- un déclenchement d'un appel vers l'identifiant d'appel dédié en utilisant ledit identifiant d'appel principal dudit dispositif de communication appelant, pour établir ladite communication avec ledit dispositif de communication à appeler.

11. Dispositif de communication appelant (DC1), disposant d'un identifiant d'appel principal (IAP1) le dispositif de communication appelant comprenant un circuit de traitement (CT2) agencé pour, préalablement à l'établissement d'une communication avec un dispositif de communication à appeler disposant d'un identifiant d'appel principal::
- un envoi, à destination d'un dispositif de gestion de communication (DGC), d'un message de requête d'initialisation de ladite communication, ledit message comprenant :
• des informations d'identification associées au dispositif de communication appelant qui ont été préalablement enregistrées dans le dispositif de gestion de communication,
• l'identifiant d'appel principal (IAP2) du dispositif de communication à appeler,
- une réception, en provenance du dispositif de gestion de communication, d'un identifiant d'appel dédié à la communication à établir et fonction soit de l'identifiant d'appel principal du dispositif de communication à appeler, soit d'un service de communication associé à la communication à établir,
- un déclenchement d'un appel vers l'identifiant d'appel dédié en utilisant ledit identifiant d'appel principal dudit dispositif de communication appelant, pour établir ladite communication avec ledit dispositif de communication à appeler.

12. Procédé selon la revendication 10, ou dispositif de communication appelant selon la revendication 11, dans lequel lorsque l'identifiant d'appel dédié à la communication à établir est fonction de l'identifiant d'appel principal du dispositif de communication à appeler, l'identifiant d'appel dédié est fonction d'un type de réseau auquel le dispositif de communication à appeler est connecté.

13. Procédé selon la revendication 10, ou dispositif de communication appelant selon la revendication 11, dans lequel lorsque l'identifiant d'appel dédié à la communication à établir est fonction de l'identifiant d'appel principal du dispositif de communication à appeler, l'identifiant d'appel dédié est égal à l'identifiant d'appel principal du dispositif de communication à appeler.

14. Programme d'ordinateur comportant des instructions de code de programme pour l'exécution des étapes d'un procédé selon l'une quelconque des revendications 1 ou 3 à 10 ou 12 ou 13, lorsque ledit programme est exécuté sur un dispositif de de communication.

15. Support d'enregistrement lisible par un ordinateur sur lequel est enregistré un programme d'ordinateur comprenant des instructions de code de programme pour l'exécution des étapes d'un procédé selon l'une quelconque des revendications 1 ou 3 à 10 ou 12 ou 13, lorsque ledit programme est exécuté sur un dispositif de communication.

## Patentansprüche

1. Verfahren zum Aufbau einer Kommunikation von einer ersten Kommunikationsvorrichtung (DC1) zu einer zweiten Kommunikationsvorrichtung (DC2), wobei die erste und die zweite Kommunikationsvorrichtung je eine Hauptanrufkennung haben, wobei das Verfahren im Bereich einer Kommunikationsverwaltungsvorrichtung (DGC) durchführt:
- einen Empfang (ST1), von der ersten Kommunikationsvorrichtung kommend, einer Nachricht, die enthält:
• der ersten Kommunikationsvorrichtung zugeordnete Identifikationsinformationen, die vorab in der Kommunikationsverwaltungsvorrichtung gespeichert wurden,
• die Hauptanrufkennung (IAP2) der zweiten Kommunikationsvorrichtung,
- ein Senden (ST5) an die erste Kommunikationsvorrichtung einer Nachricht, die eine der aufzubauenden Kommunikation dedizierte und entweder von der in der empfangenen Nachricht enthaltenen Hauptanrufkennung der zweiten Kommunikationsvorrichtung oder von einem der aufzubauenden Kommunikation zugeordneten Kommunikationsdienst abhängende Anrufkennung enthält,
- ein Abfangen (ST7c-ST8c) eines Anrufs von der ersten Kommunikationsvorrichtung an die dedizierte Anrufkennung, dann ein Routen (ST9c) des Anrufs zur Hauptanrufkennung der zweiten Kommunikationsvorrichtung unter Verwendung einer Sekundäranrufkennung der ersten Kommunikationsvorrichtung, wobei die Sekundärkennung vorab entsprechend den der ersten Kommunikationsvorrichtung zugeordneten Identifikationsinformationen zugeordnet wurde,
- einen Aufbau (ST10) der Kommunikation zwischen der ersten und der zweiten Kommunikationsvorrichtung.

2. Kommunikationsverwaltungsvorrichtung (DGC) zum Aufbau einer Kommunikation von einer ersten Kommunikationsvorrichtung (DC1) zu einer zweiten Kommunikationsvorrichtung (DC2), wobei die erste und die zweite Kommunikationsvorrichtung je eine Hauptanrufkennung haben, wobei die Kommunikationsverwaltungsvorrichtung eine Verarbeitungsschaltung (CT1) enthält, die eingerichtet ist für:
- einen Empfang, von der ersten Kommunikationsvorrichtung kommend, einer Nachricht, die enthält:
• der ersten Kommunikationsvorrichtung zugeordnete Identifikationsinformationen, die vorab in der Kommunikationsverwaltungsplattform gespeichert wurden,
• die Hauptanrufkennung der zweiten Kommunikationsvorrichtung,
- ein Senden an die erste Kommunikationsvorrichtung einer Nachricht, die eine der aufzubauenden Kommunikation dedizierte und entweder von der in der empfangenen Nachricht enthaltenen Hauptanrufkennung der zweiten Kommunikationsvorrichtung oder von einem der aufzubauenden Kommunikation zugeordneten Kommunikationsdienst abhängende Anrufkennung enthält,
- ein Abfangen eines Anrufs von der ersten Kommunikationsvorrichtung an die dedizierte Anrufkennung, dann ein Routen des Anrufs zur Hauptanrufkennung der zweiten Kommunikationsvorrichtung, unter Verwendung einer Sekundäranrufkennung der ersten Kommunikationsvorrichtung, wobei die Sekundärkennung vorab entsprechend den der ersten Kommunikationsvorrichtung zugeordneten Identifikationsinformationen zugeordnet wurde,
- einen Aufbau der Kommunikation zwischen der ersten und der zweiten Kommunikationsvorrichtung.

3. Verfahren nach Anspruch 1 oder Kommunikationsverwaltungsvorrichtung nach Anspruch 2, wobei das Abfangen durchgeführt wird, wenn die Hauptanrufkennung (IAP2) der zweiten Kommunikationsvorrichtung eine Anrufkennung ist, für die erlaubt ist, eine Sekundäranrufkennung zu verwenden.

4. Verfahren nach Anspruch 1 oder 3, oder Kommunikationsverwaltungsvorrichtung nach Anspruch 2 oder 3, wobei, wenn die der aufzubauenden Kommunikation dedizierte Anrufkennung von der Hauptanrufkennung der zweiten Kommunikationsvorrichtung abhängt, die dedizierte Anrufkennung von einem Netztyp abhängt, mit dem die zweite Kommunikationsvorrichtung verbunden ist.

5. Verfahren nach Anspruch 1 oder 3, oder Kommunikationsverwaltungsvorrichtung nach Anspruch 2 oder 3, wobei, wenn die der aufzubauenden Kommunikation dedizierte Anrufkennung von der Hauptanrufkennung der zweiten Kommunikationsvorrichtung abhängt, die dedizierte Anrufkennung gleich der Hauptanrufkennung der zweiten Kommunikationsvorrichtung ist.

6. Verfahren nach Anspruch 1 oder 3, oder Kommunikationsverwaltungsvorrichtung nach Anspruch 2 oder 3, wobei, wenn die der aufzubauenden Kommunikation dedizierte Anrufkennung von einem der aufzubauenden Kommunikation zugeordneten Kommunikationsdienst abhängt, die dedizierte Anrufkennung als kostenlose Anrufkennung ausgewählt wird.

7. Verfahren nach einem der Ansprüche 1 oder 3 bis 6, oder Kommunikationsverwaltungsvorrichtung nach einem der Ansprüche 2 bis 6, wobei die Sekundäranrufkennung eine Gültigkeitsdauer hat.

8. Verfahren nach einem der Ansprüche 1 oder 3 bis 7, oder Kommunikationsverwaltungsvorrichtung nach einem der Ansprüche 2 bis 7, wobei die Sekundäranrufkennung Teil einer Vielzahl von Sekundäranrufkennungen ist, die einem Provider eines Diensts der ersten Kommunikationsvorrichtung DC1 zugeteilt sind.

9. Verfahren nach den Ansprüchen 7 und 8, oder Kommunikationsverwaltungsvorrichtung nach den Ansprüchen 7 und 8, wobei die Gültigkeitsdauer der Sekundäranrufkennung eine Dauer des Abonnements des Diensts ist.

10. Verfahren, das von einer anrufenden Kommunikationsvorrichtung (DC1) durchgeführt wird, die über eine Hauptanrufkennung (IAP1) verfügt, wobei das Kommunikationsverfahren vor dem Aufbau einer Kommunikation mit einer anzurufenden Kommunikationsvorrichtung, die über eine Hauptanrufkennung verfügt, enthält:
- ein Senden, an eine Kommunikationsverwaltungsvorrichtung (DGC), einer Nachricht einer Initialisierungsanforderung der Kommunikation, wobei die Nachricht enthält:
• der anrufenden Kommunikationsvorrichtung vorab in der Kommunikationsverwaltungsvorrichtung gespeicherte zugeordnete Identifikationsinformationen,
• die Hauptanrufkennung (IAP2) der anzurufenden Kommunikationsvorrichtung,
- einen Empfang, von der Kommunikationsverwaltungsvorrichtung kommend, einer der aufzubauenden Kommunikation dedizierten und entweder von der Hauptanrufkennung der anzurufenden Kommunikationsvorrichtung oder von einem der aufzubauenden Kommunikation zugeordneten Kommunikationsdienst abhängigen Anrufkennung,
- ein Auslösen eines Anrufs an die dedizierte Anrufkennung unter Verwendung der Hauptanrufkennung der anrufenden Kommunikationsvorrichtung, um die Kommunikation mit der anzurufenden Kommunikationsvorrichtung aufzubauen.

11. Anrufende Kommunikationsvorrichtung (DC1), die über eine Hauptanrufkennung (IAP1) verfügt, wobei die anrufende Kommunikationsvorrichtung eine Verarbeitungsschaltung (CT2) enthält, die vor dem Aufbau einer Kommunikation mit einer über eine Hauptanrufkennung verfügenden anzurufenden Kommunikationsvorrichtung eingerichtet ist für:
- ein Senden, an eine Kommunikationsverwaltungsvorrichtung (DGC), einer Initialisierungsanforderungsnachricht der Kommunikation, wobei die Nachricht enthält:
• der anrufenden Kommunikationsvorrichtung zugeordnete Identifikationsinformationen, die vorab in der Kommunikationsverwaltungsvorrichtung gespeichert wurden,
• die Hauptanrufkennung (IAP2) der anzurufenden Kommunikationsvorrichtung,
- einen Empfang, von der Kommunikationsverwaltungsvorrichtung kommend, einer der aufzubauenden Kommunikation dedizierten und entweder von der Hauptanrufkennung der anzurufenden Kommunikationsvorrichtung oder von einem der aufzubauenden Kommunikation zugeordneten Kommunikationsdienst abhängigen Anrufkennung,
- ein Auslösen eines Anrufs zur dedizierten Anrufkennung unter Verwendung der Hauptanrufkennung der anrufenden Kommunikationsvorrichtung, um die Kommunikation mit der der anzurufenden Kommunikationsvorrichtung aufzubauen.

12. Verfahren nach Anspruch 10 oder anrufende Kommunikationsvorrichtung nach Anspruch 11, wobei, wenn die der aufzubauenden Kommunikation dedizierte Anrufkennung von der Hauptanrufkennung der anzurufenden Kommunikationsvorrichtung abhängt, die dedizierte Anrufkennung von einem Netzwerktyp abhängt, mit dem die anzurufende Kommunikationsvorrichtung verbunden ist.

13. Verfahren nach Anspruch 10, oder anrufende Kommunikationsvorrichtung nach Anspruch 11, wobei, wenn die der aufzubauenden Kommunikation dedizierte Anrufkennung von der Hauptanrufkennung der anzurufenden Kommunikationsvorrichtung abhängt, die dedizierte Anrufkennung gleich der Hauptanrufkennung der anzurufenden Kommunikationsvorrichtung ist.

14. Computerprogramm, das Programmcodeanweisungen zur Ausführung der Schritte eines Verfahrens nach einem der Ansprüche 1 oder 3 bis 10 oder 12 oder 13 aufweist, wenn das Programm in einer Kommunikationsvorrichtung ausgeführt wird.

15. Computerlesbarer Speicherträger, auf dem ein Computerprogramm gespeichert ist, das Programmcodeanweisungen für die Ausführung der Schritte eines Verfahrens nach einem der Ansprüche 1 oder 3 bis 10 oder 12 oder 13 enthält, wenn das Programm in einer Kommunikationsvorrichtung ausgeführt wird.

## Claims

1. Method for setting up a communication from a first communication device (DC1) intended for a second communication device (DC2), the first and second communication devices each having a main call identifier, the method implementing, in a communication management device (DGC):
- reception (ST1), from the first communication device, of a message comprising:
• identification data associated with the first communication device, which have been stored beforehand in the communication management device,
• the main call identifier (IAP2) of the second communication device,
- transmission (ST5) to the first communication device of a message containing a call identifier dedicated to the communication to be set up and dependent either on the main call identifier of the second communication device contained in the received message, or on a communication service associated with the communication to be set up,
- interception (ST7c-ST8c) of a call of the first communication device to the dedicated call identifier, then routing (ST9c) of said call to the main call identifier of the second communication device, using a secondary call identifier of the first communication device, said secondary identifier having been associated beforehand in correspondence with the identification data associated with the first communication device,
- set-up (ST10) of the communication between the first and second communication device.

2. Communication management device (DGC) for setting up a communication from a first communication device (DC1) intended for a second communication device (DC2), the first and second communication devices each having a main call identifier, said communication management device comprising a processing circuit (CT1) that is arranged to implement:
- reception, from the first communication device, of a message comprising:
• identification data associated with the first communication device, which have been stored beforehand in the communication management platform,
• the main call identifier of the second communication device,
- transmission to the first communication device of a message containing a call identifier dedicated to the communication to be set up and dependent either on the main call identifier of the second communication device contained in the received message, or on a communication service associated with the communication to be set up,
- interception of a call of the first communication device to the dedicated call identifier, then routing of said call to the main call identifier of the second communication device, using a secondary call identifier of the first communication device, said secondary identifier having been associated beforehand in correspondence with the identification data associated with the first communication device,
- set-up of the communication between the first and second communication device.

3. Method according to Claim 1 or communication management device according to Claim 2, said interception being implemented when said main call identifier (IAP2) of the second communication device is a call identifier for the intention of which it is permitted to use a secondary caller identifier.

4. Method according to Claim 1 or 3, or communication management device according to Claim 2 or 3, wherein when the call identifier dedicated to the communication to be set up is dependent on the main call identifier of the second communication device, the dedicated call identifier is dependent on a type of network to which the second communication device is connected.

5. Method according to Claim 1 or 3, or communication management device according to Claim 2 or 3, wherein when the call identifier dedicated to the communication to be set up is dependent on the main call identifier of the second communication device, the dedicated call identifier is equal to the main call identifier of the second communication device.

6. Method according to Claim 1 or 3, or communication management device according to Claim 2 or 3, wherein when the call identifier dedicated to the communication to be set up is dependent on a communication service associated with the communication to be set up, the dedicated call identifier is selected by way of free call identifier.

7. Method according to one of Claims 1 or 3 to 6, or communication management device according to one of Claims 2 to 6, wherein said secondary call identifier has a duration of validity.

8. Method according to one of Claims 1 or 3 to 7, or communication management device according to one of Claims 2 to 7, wherein said secondary call identifier forms part of a plurality of secondary call identifiers attributed to a provider of a service of said first communication device DC1.

9. Method according to Claims 7 and 8, or communication management device according to Claims 7 and 8, wherein said duration of validity of said secondary call identifier is a duration of subscription to said service.

10. Method, implemented by a calling communication device (DC1), which has been provided with a main call identifier (IAP1), said communication method comprising, prior to set-up of a communication with a communication device to be called, which has been provided with a main call identifier:
- transmission, for the intention of a communication management device (DGC), of a message requesting initialization of said communication, said message comprising:
• identification data associated with the calling communication device, said data being stored beforehand in the communication management device,
• the main call identifier (IAP2) of the communication device to be called,
- reception, from the communication management device, of a call identifier dedicated to the communication to be set up and dependent either on the main call identifier of the communication device to be called, or on a communication service associated with the communication to be set up,
- trigger of a call to the dedicated call identifier using said main call identifier of said calling communication device, with a view to establishing said communication with said communication device to be called.

11. Calling communication device (DC1), which has been provided with a main call identifier (IAP1), the calling communication device comprising a processing circuit (CT2) arranged to implement, prior to set-up of a communication with a communication device to be called, which has been provided with a main call identifier:
- transmission, for the intention of a communication management device (DGC), of a message requesting initialization of said communication, said message comprising:
• identification data associated with the calling communication device, said data being stored beforehand in the communication management device,
• the main call identifier (IAP2) of the communication device to be called,
- reception, from the communication management device, of a call identifier dedicated to the communication to be set up and dependent either on the main call identifier of the communication device to be called, or on a communication service associated with the communication to be set up,
- trigger of a call to the dedicated call identifier using said main call identifier of said calling communication device, with a view to establishing said communication with said communication device to be called.

12. Method according to Claim 10, or calling communication device according to Claim 11, wherein when the call identifier dedicated to the communication to be set up is dependent on the main call identifier of the communication device to be called, the dedicated call identifier is dependent on a type of network to which the communication device to be called is connected.

13. Method according to Claim 10, or calling communication device according to Claim 11, wherein when the call identifier dedicated to the communication to be set up is dependent on the main call identifier of the communication device to be called, the dedicated call identifier is equal to the main call identifier of the communication device to be called.

14. Computer program comprising program code instructions for the execution of the steps of a method according to any one of Claims 1 or 3 to 10 or 12 or 13, when said program is executed on a communication device.

15. Storage medium readable by a computer on which is stored a computer program comprising program code instructions for the execution of the steps of a method according to any one of Claims 1 or 3 to 10 or 12 or 13, when said program is executed on a communication device.
